# FASCICULE DE BREVET EUROPEEN

(11) **EP 1 454 090 B1**
(45) Date de publication et mention de la délivrance du brevet: **08.04.2009**
(21) Numéro de dépôt: 02793242.5
(22) Date de dépôt: 15.11.2002
(51) Int. Cl.: F16L 59/02

(54) **GAINE DE PROTECTION POUR TUBE DE CIRCULATION DE FLUIDE**
SCHUTZHÜLSE FÜR FLUIDZIRKULATIONSROHR
PROTECTIVE SLEEVE FOR FLUID CIRCULATION TUBE

(30) Priorité: 21.11.2001 FR 0115059
(43) Date de publication de la demande: 08.09.2004
(73) Titulaire: Federal Mogul Systems Protection, 60800 Crépy-en-Valois (FR)
(72) Inventeur: DELLA PUTTA, Lucia, F-60200 Compiègne (FR); ANDRIEU, Hubert, F-60800 Crépy-en-Valois (FR); DROMAIN, Lionel, F-60800 Crépy-en-Valois (FR)
(74) Mandataire: Stankoff, Hélène
(86) Numéro de dépôt international: PCT/FR2002/003916
(87) Numéro de publication internationale: WO 2003/044420

(56) Documents cités:
- WO-A-00/46543
- WO-A-99/04194
- US-A- 3 885 593
- US-A- 5 849 379

## Description

La présente invention concerne une gaine de protection pour tube de circulation de fluide.

Elle concerne également un procédé de fabrication d'une telle gaine de protection.

Le domaine général de l'invention concerne la protection thermique de conduite de fluide, utilisée notamment sur les véhicules automobiles.

Plus particulièrement, la présente invention peut s'appliquer aux circuits de recirculation des gaz d'échappement d'un véhicule automobile (en anglais EGR ou Exhaust Gaz Recirculation).

Il est important, au niveau de ces conduites de recirculation des gaz d'échappement, de limiter les pertes thermiques, tant pour maintenir le gaz d'échappement recirculé à une température satisfaisante que pour limiter l'échauffement des éléments environnants.

Il est connu pour isoler thermiquement ces conduites de revêtir celles-ci d'une gaine tressée ou tricotée en fibres de verre ou en fibres de silice susceptibles de résister aux températures élevées, de l'ordre de 400-500° C, d ces tubes de recirculation. Une telle gaine de protection est décrite dans le brevet WO 00/46543.

Ces gaines de protection peuvent être tubulaires de telle sorte qu'il est nécessaire de monter ces gaines sur les conduites avant raccordement des conduites à l'ensemble du circuit d'échappement. Le montage de ces gaines tubulaires est en outre difficile à mettre en oeuvre lors du passage des parties coudées ou de sections diverses de ces conduites.

Il existe également des gaines tubulaires fendues le long d'un axe longitudinal et qui, suite à un traitement thermique, peuvent s'auto-refermer par recouvrement des bords longitudinaux de la gaine l'un sur l'autre.

Des flanches ou clips de fixation doivent alors être placés pour maintenir cette gaine fermée sur la conduite à protéger.

Ces solutions sont fastidieuses à mettre en oeuvre, et le montage de la gaine de protection sur la conduite est relativement compliqué.

La présente invention vise à résoudre les inconvénients précités ci-dessus et propose une gaine de protection pour conduite de circulation d'un fluide particulièrement simple à monter, quelle que soit la courbure ou la section transversale de ces conduites.

A cet effet, la présente invention vise, dans un premier aspect, une gaine de protection pour tube de circulation de fluide réalisée en une structure de fibres entrelacées.

Selon l'invention, cette gaine est formée d'une bande de fibres entrelacées comprenant au moins une poche s'étendant dans la direction transversale de la bande, et elle comprend un ressort logé dans la poche et adapté, dans une position d'équilibre stable, à maintenir fermée la gaine de protection par recouvrement des bords longitudinaux de la bande.

On obtient ainsi une structure complètement originale de gaine en fibres entrelacées qui comporte, dans une poche transversale, un ressort adapté dans une position de repos à maintenir les bords longitudinaux de la gaine fermée, en recouvrement l'un par rapport à l'autre.

Le montage de cette gaine peut ainsi être réalisé facilement, par écartement des bords, en exerçant une force opposée à la force de rappel élastique exercée par le ressort, puis en relâchant cet effort de telle sorte que le ressort dans sa position d'équilibre maintient les bords longitudinaux de la bande l'un sur l'autre, autour de la conduite.

Une telle gaine de protection permet d'épouser les différentes formes de conduite en profitant de la déformation possible du ressort.

En outre, son montage peut être réalisé même lorsque la conduite est raccordée à l'ensemble du système d'échappement d'un véhicule automobile, dès lors que cette gaine est fendue dans sa direction longitudinale.

Enfin, les ressorts permettent à la fois de refermer la gaine de protection et de maintenir celle-ci en position sur la conduite à protéger.

Selon une caractéristique préférée de l'invention, la gaine de protection comprend plusieurs poches disposées à distance les unes des autres suivant la direction longitudinale de la bande de fibres entrelacées.

On peut ainsi réaliser des poches successivement dans la bande pour maintenir celle-ci en diverses positions de la conduite à protéger. Ces poches peuvent être éventuellement équidistantes les unes des autres dans la direction longitudinale de la gaine.

La position de ces poches peut en outre être déterminée en fonction de la longueur et de la courbure de la conduite à protéger.

Selon une caractéristique préférée de l'invention, la poche est formée d'une double paroi de fibres entrelacées constituant une poche rectangulaire fermée sur les quatre côtés.

Le ressort logé dans cette poche fermée ne peut ainsi s'échapper de la gaine de protection.

Cette poche est en outre réalisée dans la même structure que le reste de la gaine de telle sorte que son procédé de fabrication reste relativement simple.

Selon une autre caractéristique préférée de l'invention, le ressort est un ressort métallique en forme de bande adapté, dans une position d'équilibre instable, à former une bande plane et dans une position d'équilibre stable, à former une spire.

Ainsi, la gaine de protection avant son montage sur une conduite peut se présenter sous la forme d'une structure tissée ou tricotée plane.

Lors du montage de cette gaine de protection, il suffit de déformer légèrement les bandes de ressort pour que ceux-ci viennent, dans une position d'équilibre stable, s'enrouler autour de la conduite de manière à refermer la gaine de protection par recouvrement de ces bords longitudinaux.

D'autres particularités et avantages de l'invention apparaîtront encore dans la description ci-après.

Aux dessins annexés, donnés à titre d'exemples non limitatifs :
- la figure 1 est une vue de face d'une gaine de protection conforme à un mode de réalisation de l'invention ;
- la figure 2 est une vue en coupe d'une gaine de protection dans une direction longitudinale selon la ligne II-II à la figure 1 ;
- les figures 3 et 4 sont des vues en coupe transversale de la gaine de protection selon respectivement les lignes III-III et IV-IV de la figure 1 ;
- la figure 5 décrit le principe de fermeture de la gaine de protection conforme à l'invention ;
- la figure 6 illustre la gaine de protection en position refermée ; et
- la figure 7 illustre un procédé de fabrication d'une gaine de protection.

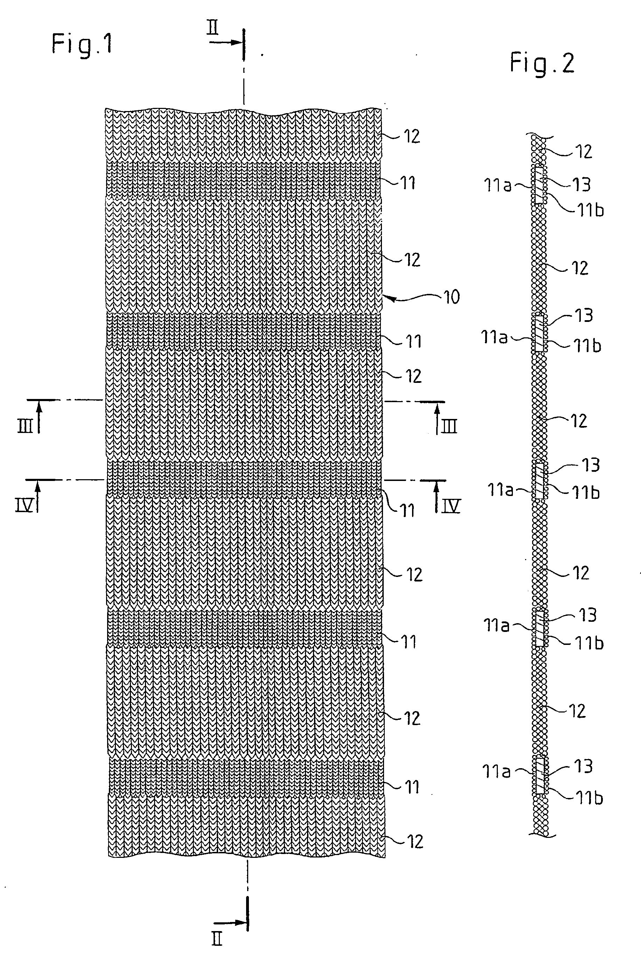

On va décrire tout d'abord en référence aux figures 1 à 4 une gaine de protection pour un tube de circulation de fluide.

Ce type de gaine de protection est généralement utilisé pour isoler thermiquement une conduite métallique dans laquelle circule un fluide, tel qu'un gaz d'échappement en sortie d'un véhicule automobile.

Comme bien illustré à la figure 1, cette gaine de protection est formée d'une bande de fibres entrelacées 10.

Ici, les fibres sont tricotées. Elles pourraient également être tissées ou tressées de manière à former une bande par entrelacement des fibres.

Cette bande de fibres 10 comprend au moins une poche 11 s'étendant dans la direction transversale de la bande.

Ici, la bande comprend plusieurs poches 11 disposées à distance les unes des autres dans la direction longitudinale de la bande 10.

De manière nullement limitative, les poches 11 peuvent être équidistantes les unes des autres. Elles pourraient également être disposées le long de la bande 10 en fonction de la forme de la conduite à protéger.

En particulier, des poches 11 peuvent être disposées à proximité des extrémités de la gaine de protection, ou encore dans des parties de la gaine de protection destinée à recouvrir des parties coudées de la conduite ou de section irrégulière, c'est-à-dire des parties de la conduite dans lesquelles la gaine de protection est fortement déformée dans sa direction longitudinale ou radiale.

Chaque poche 11 est ainsi séparée par des portions de bande 12 également tricotées.

La bande 10 est ainsi formée en un tricot.

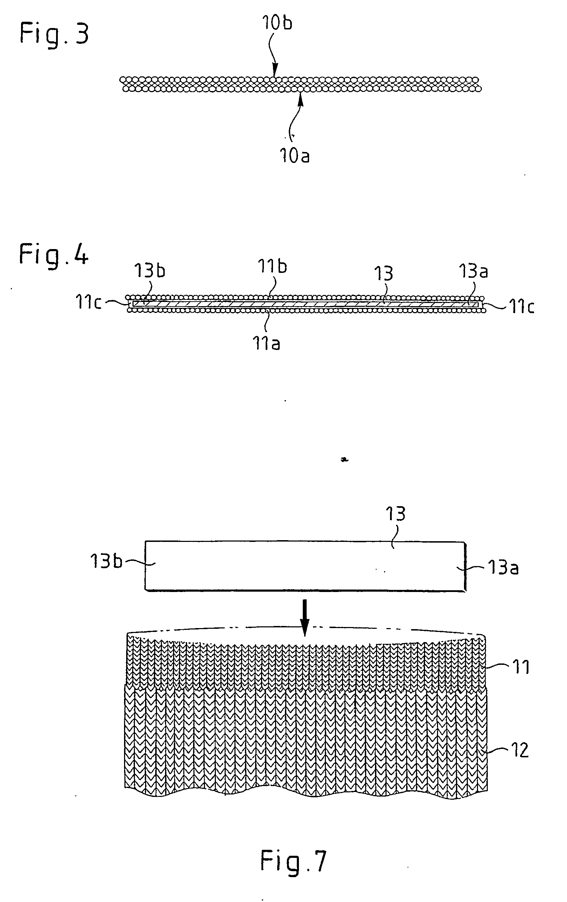

Comme illustré à la figure 3, la bande de fibres entrelacées présente un aspect identique sur les deux faces 10a, 10b de la bande.

Dans ce mode de réalisation, comme illustré à la figure 4, les poches 11 sont réalisées en un tricot jersey tubulaire alors que les portions de bande 12, disposées entre les poches 11, sont réalisées en un tricot interlock. D'autres points de tricot pourraient également être utilisés pour réaliser les portions de bande 12, et notamment un point de côte ou tout autre point permettant de présenter un aspect identique sur les deux faces 10a, 10b de la bande.

Entre ces portions de bande 12, les poches 11 tricotées en jersey tubulaire forme ainsi une double paroi 11 a, 11 b de fibres tricotées de manière à constituer une poche rectangulaire 11 fermée sur ses quatre côtés.

Ainsi, chaque poche 11 est raccordée par un bord transversal fermé à des portions de bande 12 situées dans le prolongement de la poche 11, et les bords latéraux 11 c de chaque poche 11 sont également fermés.

La matière utilisée pour réaliser cette bande peut être constituée de fibres de verre, susceptibles de résister à des températures de l'ordre de 400-500°C. Si les températures des conduites à protéger sont très supérieures, et par exemple supérieures à 1 000°C, il est possible d'utiliser des fibres de silice. Afin de limiter le coût d'une telle gaine de protection réalisée en fibres de silice, on peut réaliser celle-ci avec un mélange de fibres de verre et de fibres de silice tricotées de telle sorte que les fibres de verre sont disposées préférentiellement sur une première face, par exemple une face 10a, de la bande 10, et les fibres de silice sont disposées préférentiellement sur une seconde face, par exemple une face 10b, de la bande 10.

Lors du montage de la gaine de protection sur la conduite, la seconde face 10b réalisée en fibres de silice est adaptée à venir en contact avec la conduite à protéger, l'autre face 10a en fibres de verre formant la face extérieure de la gaine de protection.

Comme illustré à la figure 2, un ressort 13 est logé dans chaque poche 11.

Ici, le ressort 13 est un ressort métallique en forme de bande comme bien illustré à la figure 4.

Ce ressort en forme de bande comporte deux positions d'équilibre :
- une position d'équilibre instable, dans laquelle le ressort métallique est sous forme de bande plane, et
- une position d'équilibre stable, dans laquelle le ressort métallique s'enroule de manière à former une spire, les extrémités 13a, 13b du ressort 13 étant, dans cette forme de spire, adaptées à venir en recouvrement l'une sur l'autre sur un secteur angulaire de l'ordre de 90°C.

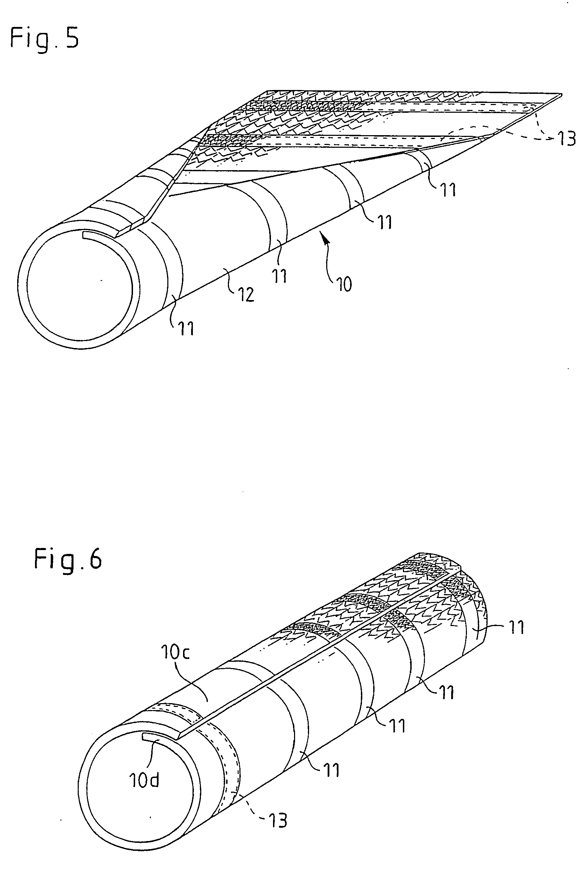

Comme bien illustré aux figures 5 et 6, la gaine de protection se présente sous la forme d'une bande plane, les ressorts 13 étant, dans une position d'équilibre instable, maintenus dans un même plan.

Il suffit de déformer légèrement chacun des ressorts 13 logés dans les poches 11 pour obtenir la fermeture de la gaine de protection de telle sorte que ces bords longitudinaux 10c, 10d viennent en recouvrement l'un sur l'autre.

A titre d'exemple, la zone de recouvrement des bords longitudinaux 10c, 10d de la gaine de protection refermée peut s'étendre entre 90° et 10° de telle sorte que la section transversale de gaine de protection peut s'adapter à différentes conduites de sections variées.

Grâce aux ressorts 13 logés en différents points de la gaine de protection, cette gaine de protection est maintenue refermée par les ressorts 13 et en position sur la conduite à protéger par ces mêmes ressorts 13.

Le positionnement de cette gaine de protection sur une conduite est ainsi facilité par rapport aux solutions existantes et ne requiert pas l'utilisation d'accessoires pour refermer et maintenir en position la gaine de protection sur une conduite.

On va décrire à présent en référence à la figure 7 un exemple de procédé de réalisation d'une gaine de protection telle que décrite précédemment.

Ici, cette gaine de protection est réalisée à partir d'un tricotage de fibres.

Afin d'obtenir une gaine de protection telle qu'illustrée à la figure 1, on tricote :
- une portion de bande 12 de fibres en un point de tricot interlock ;
- une poche ouverte 11 en un tricot jersey tubulaire, dans le prolongement de la portion de bande 12.

Dès que cette poche 11 est de longueur suffisante pour loger un ressort 13, on insère celui-ci comme illustré à la figure 7 dans cette poche 11.

La poche 11 est ensuite refermée dans la direction transversale de la bande 10 par tricotage d'une autre portion de bande 12 de fibres en tricot interlock.

Ces étapes peuvent être mises en oeuvre de manière récursive pour former plusieurs poches 11 dans la bande 10.

Ici, grâce à l'utilisation d'un tricot jersey tubulaire, l'étape de fermeture des bords latéraux 11 c de la poche 11 est réalisée simultanément aux étapes de tricotage de la poche.

Bien entendu, de nombreuses modifications pourraient être apportées aux exemples de réalisation décrits ci-dessus.

En particulier, les poches 11 destinées à loger les ressorts pourraient également être réalisées à partir de deux parois tricotées 11 a, 11 b séparément, puis raccordées le long des bords longitudinaux 11 c de chaque poche afin de fermer celle-ci.

Par ailleurs, l'ensemble de la bande et des poches pourrait être tricoté, en gardant au moins un des bords longitudinaux 11 c de chaque poche 11 ouvert de telle sorte que les ressorts 13 soient introduits dans chaque poche par un de ces bords longitudinaux 11 c après tricotage de l'ensemble de la bande. Le ou les bords longitudinaux 11 c sont ensuite refermés, par une couture par exemple.

## Revendications

1. Gaine de protection pour tube de circulation de fluide réalisée en une structure de fibres entrelacées, **caractérisée en ce qu'**elle est formée d'une bande (10) de fibres entrelacées comprenant au moins une poche (11) s'étendant dans la direction transversale de la bande (10), et **en ce qu'**elle comprend un ressort (13) logé dans ladite poche (11) et adapté, dans une position d'équilibre stable, à maintenir fermée ladite gaine de protection par recouvrement des bords longitudinaux (10c, 10d) de la bande (10).

2. Gaine de protection conforme à la revendication 1, **caractérisée en ce qu'**elle comprend plusieurs poches (11) disposées à distance les unes des autres suivant la direction longitudinale de la bande (10) de fibres entrelacées.

3. Gaine de protection conforme à l'une des revendications 1 ou 2, **caractérisée en ce que** la poche (11) est formée d'une double paroi (11 a, 11 b) de fibres entrelacées, constituant une poche rectangulaire fermée sur les quatre côtés.

4. Gaine de protection conforme à l'une des revendications 1 à 3, **caractérisée en ce qu'**elle est formée d'une bande (10) de fibres entrelacées d'aspect identique sur les deux faces (10a, 10b) de la bande (10).

5. Gaine de protection conforme à la revendication 4 **caractérisée en ce qu'**elle comporte des fibres de verre disposées préférentiellement sur une première face (10c) de la bande (10) et des fibres de silice disposées préférentiellement sur une seconde face (10b) de la bande (10).

6. Gaine de protection conforme à l'une des revendications 1 à 5, **caractérisée en ce qu'**elle est formée d'une bande (10) de fibres tricotées.

7. Gaine de protection conforme à la revendication 6, **caractérisée en ce que** la poche (11) est réalisée en tricot jersey tubulaire.

8. Gaine de protection conforme à l'une des revendications 1 à 7, **caractérisée en ce que** le ressort (13) est un ressort métallique en forme de bande adapté, dans une position d'équilibre stable, à former une spire.

9. Gaine de protection conforme à la revendication 8, **caractérisée en ce que** le ressort métallique (13) en forme de bande est adapté, dans une position d'équilibre instable, à former une bande plane.

10. Utilisation d'une gaine de protection conforme à l'une des revendications 1 à 9 pour protéger thermiquement une conduite d'un circuit de recirculation de gaz d'échappement d'un véhicule automobile.

## Claims

1. Protective sleeve for fluid circulation tubes comprising a structure of interlaced fibres, **characterised in that** it is formed of a strip (10) of interlaced fibres comprising at least one pocket (11) extending in the transverse direction of the strip (10), and **in that** it comprises a spring (13) housed in said pocket (11) and adapted, in a stable equilibrium position, to hold said protective sleeve closed by virtue of overlapping of longitudinal edges (10c, 10d) of the strip (10).

2. Protective sleeve according to claim 1,
**characterised in that** it comprises a plurality of pockets (11) spaced from each other in the longitudinal direction of the strip (10) of interlaced fibres.

3. Protective sleeve according to either claim 1 or claim 2, **characterised in that** the pocket (11) is formed of a double wall (11a, 11b) of interlaced fibres constituting a rectangular pocket closed on four sides.

4. Protective sleeve according to any of claims 1 to 3, **characterised in that** it is formed of a strip (10) of interlaced fibres of identical appearance on both faces (10a, 10b) of the strip (10).

5. Protective sleeve according to claim 4
**characterised in that** it comprises glass fibres preferentially disposed on a first face (10c) of the strip (10) and silica fibres preferentially disposed on a second face (10b) of the strip (10).

6. Protective sleeve according to any of claims 1 to 5, **characterised in that** it is formed of a strip (10) of knitted fibres.

7. Protective sleeve according to claim 6,
**characterised in that** the pocket (11) is knitted with a tubular stocking stitch.

8. Protective sleeve according to any of claims 1 to 7, **characterised in that** the spring (13) is a metal leaf spring adapted in a stable equilibrium position to form a spiral.

9. Protective sleeve according to claim 8,
**characterised in that** the metal leaf spring (13) is adapted in an unstable equilibrium position to form a plane strip.

10. Use of a protective sleeve according to any of claims 1 to 9 for thermally protecting a motor vehicle exhaust gas recirculation circuit pipe.

## Patentansprüche

1. Schutzhülle für Fluidzirkulationsrohr, die aus einer Struktur mit verwebten Fasern verwirklicht ist, **dadurch gekennzeichnet, dass** sie aus einem Streifen (10) aus miteinander verwebten Fasern gebildet ist, der wenigstens eine Tasche (11) aufweist, die sich in transversaler Richtung des Streifens (10) erstreckt, und dass sie eine Feder (13) aufweist, die sich in der Tasche (11) befindet und dazu ausgelegt ist, in einer stabilen Gleichgewichtsposition die Schutzhülle durch Abdeckung der Seitenkanten (10c, 10d) des Streifens geschlossen zu haften.

2. Schutzhülle nach Anspruch 1, **dadurch gekennzeichnet, dass** sie mehrere Taschen (11) aufweist, die in Längsrichtung des Streifens (10) aus miteinander verwebten Fasern in gegenseitigem Abstand angeordnet sind.

3. Schutzhülle nach einem der Ansprüche 1 oder 2, **dadurch gekennzeichnet, dass** die Tasche (11) aus einer Doppelwand (11a, 11b) aus miteinander verwebten Fasern gebildet ist, die eine an den vier Seiten geschlossene rechtwinklige Tasche bildet.

4. Schutzhülle nach einem der Ansprüche 1 bis 3, **dadurch gekennzeichnet, dass** sie aus einem Streifen (10) aus miteinander verwebten Fasern, die auf den zwei Seiten (10a, 10b) des Streifens (10) völlig gleich aussehen, gebildet ist.

5. Schutzhülle nach Anspruch 4, **dadurch gekennzeichnet, dass** sie Glasfasern, die vorzugsweise auf einer ersten Seite (10c) des Streifens (10) angeordnet sind, und Siliciumoxidfasern, die vorzugsweise auf einer zweiten Seite (10b) des Streifens (10) angeordnet sind, enthält.

6. Schutzhülle nach einem der Ansprüche 1 bis 5, **dadurch gekennzeichnet, dass** sie aus einem Streifen (10) aus gewirkten Fasern gebildet ist.

7. Schutzhülle nach Anspruch 6, **dadurch gekennzeichnet, dass** die Tasche (11) aus schlauchförmigem Jersey-Trikot verwirklicht ist.

8. Schutzhülle nach einem der Ansprüche 1 bis 7; **dadurch gekennzeichnet, dass** die Feder (13) eine Metallfeder in Form eines Streifens ist, der dazu ausgelegt ist, in einer stabilen Gleichgewichtsposition eine Windung zu bilden.

9. Schutzhülle nach Anspruch 8, **dadurch gekennzeichnet, dass** die Metallfeder (13) in Form eines Bandes dazu ausgelegt ist, in einer instabilen Gleichgewichtsposition einen ebenen Streifen zu bilden.

10. Verwendung einer Schutzhülle nach einem der Ansprüche 1 bis 9, um eine Leitung eines Abgasrückführungskreises eines Kraftfahrzeugs thermisch zu schützen.
